# EUROPÄISCHE PATENTSCHRIFT

(11) **EP 0 435 016 B1**
(45) Veröffentlichungstag und Bekanntmachung des Hinweises auf die Patenterteilung: **03.11.1999**
(21) Anmeldenummer: 90123050.8
(22) Anmeldetag: 01.12.1990
(51) Int. Cl.: D01H 4/12

(54) **Offenend-Spinnvorrichtung**
Open end spinning machine
Métier à filer à bout libre

(30) Priorität: 25.12.1989 DE 3942612
(43) Veröffentlichungstag der Anmeldung: 03.07.1991
(73) Patentinhaber: Rieter Ingolstadt Spinnereimaschinenbau AG, 85055 Ingolstadt (DE)
(72) Erfinder: Zehndbauer, Alfons, W-8071 Wettstetten (DE); Breitenhuber, Josef, W-8079 Buxheim (DE)

(56) Entgegenhaltungen:
- DE-A- 2 412 174
- DE-B- 2 349 072
- DE-B- 2 412 004
- FR-A- 2 384 043
- GB-A- 1 363 604

## Beschreibung

Die Erfindung betrifft eine Offenend-Rotorspinnvorrichtung gemäß dem Oberbegriff des Anspruches 1.

Bei Offenend-Spinnvorrichtungen ist es bekannt, daß sich der Schaft in axialer Richtung an einem Spurlager abstützt. Dies ist beispielsweise in der DE-AS 24 12 004 gezeigt. Die derart ausgestalteten Axiallagerungen haben den Nachteil, daß durch metallische Berührung des schnell rotierenden Rotorschaftes das Axiallager mechanisch stark beansprucht wird und schnell verschleißt. Über ausreichend lange Zeit können keine hohen Drehzahlen gefahren werden.

Bei anderen Ausführungsformen einer Offenend-Spinnvorrichtung (DE-OS 23 17 306, DE 35 23 116 A1) stützt sich der Schaft axial an einer drehbar gelagerten Kugel ab. Diese Ausführungen haben den Nachteil, daß zur Gewährleistung des langsamen Mitdrehens der Kugel Rind zur Verringerung des Verschleißes das Axiallager geschmiert werden muß. Durch die hohe Drehzahl des Rotors wird Schmiermittel aus dem Axiallager herausgefördert, was zu Verunreinigungen der Spinnvorrichtung und des Spinngutes führt. Darüber hinaus ist so eine Lagerung aufwendig und erfordert einen hohen Wartungsaufwand. Ständige Kontrollen des Ölstandes und Nachfüllen von ausgetretenem Öl sind notwendig, wozu die Spinnvorrichtung stillgesetzt werden muß. Dadurch werden zusätzliche Kosten verursacht. Bei hohen Drehzahlen, z.B. solche bis über 120 000 u/min treten die genannten Probleme verstärkt auf. Ein weiterer Nachteil ist, daß die während des Betriebs auftretenden axialen, stoßartigen Bewegungen des Rotorschaftes, die durch radiale stoßartige Belastungen des Rotorschaftes z.B. durch das Antriebsmittel oder durch Umwucht im Rotorteller verursacht werden, von den bekannten Axiallagern nicht ausreichend gedämpft werden können. Es kann dadurch vorkommen, daß der Spinnrotor seine axiale Position verläßt, was zu einem Unterbrechen des Spinnprozesses oder zum Anlaufen des Spinnrotors am Rotorgehäuse führt.

Aufgabe der vorliegenden Erfindung ist es, eine Offenend-Spinnvorrichtung gemäß dem Oberbegriff des Anspruchs 1 so auszugestalten, daß die Nachteile des Standes der Technik vermieden werden und sie auch für sehr hohe Rotordrehzahlen einsetzbar ist.

Diese Aufgabe wird durch die im Anspruch 1 genannten Merkmale gelöst. Die axiale Lagerung von direkt gelagerten Spinnrotoren mittels aerostatischer Lagerung ist bekannt. Die DE-OS 24 12 174 zeigt einen direkt gelagerten Spinnrotor mit axial wirkenden, aerostatischen Drucklagern. Aus der DE-AS 26 16 132 ist ein direkt gelagerter Offenend-Spinnrotor gezeigt, der sich über ein aerostatisches Axiallager oder ein Spiralrillenlager in Verbindung mit einem aerostatischen Axiallager abstützt.

Die bei direkten Rotorlagern bekannten aerostatischen Axiallager jedoch sind nicht geeignet Spinnrotoren gattungsgemäßer OffenendSpinnvorrichtungen zu lagern. Bei gattungsgemäßen Spinnvorrichtungen treten in der Praxis, z.B. durch Unregelmäßigkeiten im Friktionsbereich des Antriebsmittels oder durch Unwucht im Spinnrotor, radial stoßartige Belastungen auf den Rotorschaft auf, die sich stoßartig auf das Axiallager auswirken. Die pneumatischen Axiallager bei direkt gelagerten Spinnrotoren sind nicht in der Lage diese hohen stoßartigen axialen Belastungen aufzunehmen. In der GB-A-13 63 604 ist eine Prinzipdarstellung einer Offenend-Spinnvorrichtung gemäß dem Oberbegriff des Anspruchs 1 mit einem mittels Stützscheiben gelagerten Spinnrotor gezeigt, bei der der Spinnrotor, um ihn axial in Position zu halten, an seinem dem Rotortopf abgewandten Ende mit einem Druckluftstrahl beaufschlagt ist. In dieser Veröffentlichung sind keine weiteren Angaben gemacht, wie ein aerostatisches Axiallager für eine Spinnrotor für eine Offenend-Spinnvorrichtung ausgestaltet sein muß, um den Anforderungen im Betrieb der Spinnvorrichtung zu genügen.

Durch die erfindungsgemäße Ausgestaltung wird die bekannte Offenend-Spinnvorrichtung dahingehend verbessert, daß die Nachteile bekannter Axiallager vermieden werden. Darüber hinaus ist das erfindungsgemäß ausgestaltete Axiallager, was besonders vorteilhaft ist, in seiner Funktion praktisch unabhängig von der Drehzahl des Spinnrotors, so daß höchste Drehzahlen beherrscht werden können. Die mangelnde axiale Dämpfung bei gattungsgemäßen Vorrichtungen wird verbessert, so daß eine exakte, betriebssichere axiale Führung des Rotorschafts möglich wird. Das Lager ist dabei wartungsarm und unterliegt nur einem sehr geringen Verschleiß. Durch die erfindungsgemäße Verwendung einer reibungsarmen Werkstoffpaarung zwischen Schaft und Lagerfläche wird es möglich, auch starke axiale Schläge des Rotorschaftes durch das Axiallager aufzunehmen, denn selbst wenn der Lagerspalt verdrängt wird und eine Berührung zwischen Schaft und Lagerfläche stattfindet, können solche axiale Lasten vom Axiallager der erfindungsgemäßen Offenend-Spinnvorrichtung ohne Schaden aufgenommen werden. Durch die reibungsarme Ausgestaltung des Axiallagers kann ein geringer Lagerspalt vorgesehen werden, der die Steifigkeit des Lagers erhöht und dadurch die exakte axiale Positionierung des Spinnrotors ermöglicht und gleichzeitig den Luftverbrauch senkt.

Dadurch, daß die Luft vor dem Austritt in den Lagerspalt eine Drosselvorrichtung passiert, wird die Steifigkeit des Lagers erhöht und es ist möglich die Größe des Lagerspaltes im Betrieb der Spinnvorrichtung zu beeinflussen. Dadurch kann vorteilhafterweise die Steifigkeit des Lagers festgelegt werden. Bei einer Vergrößerung des Lagerspaltes während des Betriebes bedingt die Drossel ein sofortiges Absinken des Drucks im Lagerspalt und damit ein Zurückkehren des Spinnrotors in seine Ausgangslage. Das Lager verbraucht außerdem weniger Luft.

Besonders günstig ist es die Drosselvorrichtung unmittelbar vor dem Austritt der Luft in den Lagerspalt anzuordnen. Dies bewirkt eine besonders hohe Lagersteifigkeit bei gleichzeitig geringem Luftverbrauch. Die für die Steifigkeit des Lagers ausschlaggebende Luftsäule zwischen Drossel und Lagerspalt wird sehr klein gehalten.

Als Werkstoff für die Drossel ist es besonders vorteilhaft einen Sinterwerkstoff zu verwenden, weil dadurch eine gute Drosselwirkung erreicht wird. Die Porengröße ist dabei abhängig von der Sauberkeit der verwendeten Luft. Eine günstige Ausgestaltung einer Drossel ergibt sich, wenn sie gleichzeitig aus einem reibungsarmen Werkstoff besteht. Lagerplatte und Drossel können dadurch einteilig hergestellt werden. Mit einem Kohlewerkstoff ist dies vorteilhaft möglich.

Eine weitere besonders vorteilhafte Ausgestaltung der Erfindung wird dadurch erreicht, daß die Werkstoffpaarung verschleißfähig ist. Dies hat den Vorteil, daß die beiden Lagerflächen sich während des Einlaufs der Maschine aufeinander einarbeiten. Fluchtfehler, die infolge Fertigungstoleranzen praktisch unvermeidlich sind, werden dadurch automatisch ausgeglichen.

Die beiden Flächen arbeiten sich parallel zueinander ein, wodurch ein gleichmäßiger Lagerspalt erreicht wird, der die Tragfähigkeit des Lagers erhöht und den Luftverbrauch minimiert. Durch die Gleichmäßigkeit kann der Lagerspalt klein gehalten werden. Ein kleiner Lagerspalt bewirkt eine hohe Steifigkeit des Lagers, was ein Verdrängen des Luftspaltes im Axiallager durch stoßartige Bewegungen des Rotorschaftes erschwert, ohne daß durch erhöhten Druck im Lager und dem damit verbundenen größeren Luftverbrauch eine Verschlechterung der Wirtschaftlichkeit des Lagers in Kauf genommen werden muß.

Eine besonders günstige Ausgestaltung der Erfindung ergibt sich bei Verwendung eines Kohlewerkstoffs als einen Teil der Werkstoffpaarung. Vorteilhaft ist besonders die Verwendung eines Schaftendes aus Stahl, das mit einer Lagerplatte aus einem Kohlewerkstoff, insbesondere elektrographitierter Kunstkohle, zusammenarbeitet. Dieser hat den Vorteil eines sehr geringen Reibwerts. Bei Verwendung eines Schaftes, der am Ende einen Ansatz z.B. aus einem Kohlewerkstoff besitzt, ergibt sich der zusätzliche Vorteil, daß durch Austausch des Spinnrotors gleichzeitig das Verschleißteil des Axiallagers ausgetauscht werden kann. In diesem Fall ist die Lagerplatte günstigerweise aus einem verschleißfesten Werkstoff.

Im Betrieb können sich die Poren permeabler Lagerplatten durch Abrieb zusetzen und den Luftaustritt verhindern. Vorteilhafterweise werden daher in die kombinierte Drossel und Lagerplatte Sackbohrungen mittels eines scharfen Werkzeugs eingebracht, über deren Oberfläche die Luft in den Lagerspalt eintreten kann. Ein Verschmieren der Poren der Lagerfläche behindert den Luftaustritt dann nicht.

Der Luftaustritt in den Lagerspalt erfolgt vorteilhaft durch eine oder mehrere Bohrungen in der Lagerplatte. Bei Verwendung einer Bohrung wird diese vorteilhafterweise in der Mitte der kreisförmigen Lauffläche angeordnet, während bei Verwendung von mehreren Bohrungen zum Austritt der Luft in den Lagerspalt diese auf einer Kreislinie um den Mittelpunkt der Lauffläche angeordnet sind. Dies hat den Vorteil, daß die Druckverteilung im Lagerspalt gleichmäßiger ist, wodurch das Lager mit einem niedrigeren Luftdruck und damit mit einem niedrigeren Luftverbrauch betrieben werden kann. Um einen sicheren Betrieb des Axiallagers zu ermöglichen müssen die Bohrungen vom Durchmesser her so gestaltet werden, daß sie durch mechanische Berührungen zwischen Schaft und Lagerfläche, die beispielsweise während des Einlaufens des Lagers und bei starken axialen Stößen entstehen, nicht verschmiert werden können. Dieses Verschmieren der Bohrungen hätte zur Folge, daß der Luftaustritt nicht mehr möglich ist. Bei Verwendung einer Kunstkohle hat sich beispielsweise gezeigt, daß es vorteilhaft ist, für die Bohrungen einen Durchmesser von 0,6 mm zu verwenden. Das Verschmieren der Bohrungen wird dadurch verhindert.

Die Länge der Bohrungen, die die Luft von der Drosselvorrichtung in den Lagerspalt leiten, sollte möglichst kurz gehalten werden, da die Länge der Bohrungen großen Einfluß auf die Steifigkeit des Lagers hat. Bei Verwendung von Bohrungen von weniger als 7 mm Länge wird eine gute Steifigkeit des Lagers erreicht und gleichzeit die Lagerplatte stabil und besitzt eine genügend dicke Verschleißschicht.

Eine weitere vorteilhafte Ausgestaltung des Axiallagers wird damit erreicht, daß die Fläche, über die sich der Schaft abstützt, im wesentlichen denselben Durchmesser besitzt wie der Rotorschaft selbst. Dadurch wird eine große schaftseitige Abstützfläche erhalten, was die Tragfähigkeit erhöht, und gleichzeitig der Schaft so ausgestaltet, daß er aus dem Keilspalt der Stützscheiben ohne Widerstand bei einem Austausch des Rotors herausgezogen werden kann.

Besonders vorteilhaft ist, wenn der Durchmesser der Fläche über die sich der Schaft abstützt kleiner als der des Schaftes ist und der Übergang ohne einen Durchmessersprung erfolgt, weil dadurch auch das Wiedereinführen des Schaftes nach einem Austausch wesentlich erleichtert wird und Beschädigungen der Stützscheiben und der Dichtung des Rotorgehäuses vermieden werden.

Weitere vorteilhafte Ausgestaltungen der Erfindungen sind in den übrigen Unteransprüchen beschrieben.

Im folgenden wird die Erfindung an Hand von zeichnerischen Darstellungen beschrieben.

Es zeigen:
Figur 1 ein erfindungsgemäße Offenend-Spinnvorrichtung im Schnitt;
Figur 2 eine in einer Stellschraube angeordnete erfindungsgemäß ausgestaltetes Axiallager mit einer zentrischen Bohrung;
Figur 3 eine Lagerplatte mit einer zentrischen Bohrung und einer Drossel;
Figur 4a eine Lagerplatte mit kreisförmig angeordneten Bohrungen und einer Drossel;
Figur 4b eine Ansicht der Lagerplatte mit Bohrungen;
Figur 5 eine Stellschraube mit einer elastisch gelagerten Lagerplatte;
Figur 6 eine weitere Ausführungsform einer elastisch gelagerten Lagerplatte;
Figur 7 eine Lagerplatte aus einem permeablen Werkstoff mit darin angeordneten Sacklochbohrungen;
Figur 8 ein konisch verjüngtes Schaftende;
Figur 9 ein Schaftende mit einem Ansatz aus reibungsarmem Werkstoff.

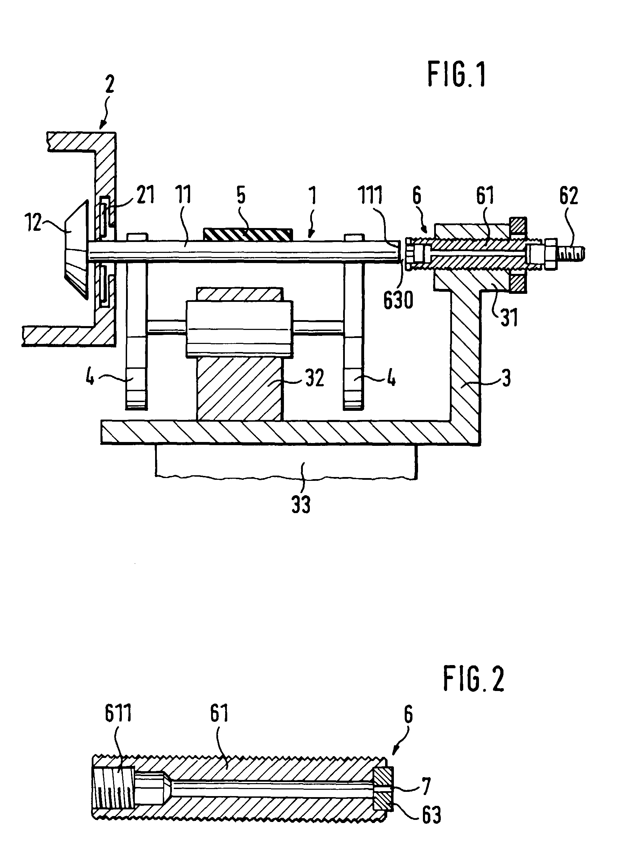

In Figur 1 ist eine erfindungsgemäß ausgestaltete Offenend-Spinnvorrichtung im Schnitt gezeigt. Die wesentlichen Bestandteile sind der Spinnrotor 1 mit seinem Schaft 11 und dem Rotorteller 12, das Rotorgehäuse 2 mit der Rotorgehäusedichtung 21, der Lagerbock 3, mit einer Aufnahme 31 für das Axiallager 6 und einer Aufnahme 32 für die Lagerungen der Stützscheiben 4, die Stützscheiben 4 zur Aufnahme des Rotorschaftes, das Antriebsmittel 5, ein Tangentialriemen, zum Antrieb des Spinnrotors 1 und das Axiallager 6 zur axialen Abstützung des Rotorschaftes 11. Der Rotorschaft 12 reicht mit seinem den Rotorteller 12 tragenden Ende in das Rotorgehäuse 2 durch die Bohrung der Rotorgehäusedichtung 21 hindurch.

Das Axiallager 6 ist in einer Stellschraube 61 angeordnet und liegt dem freien Ende 111 des Rotorschaftes 11 gegenüber. Die Aufnahme 31 besitzt dazu eine Bohrung mit einem Gewinde, in das die Stellschraube axial einjustierbar eingeschraubt ist. Zur Fixierung dient eine Kontermutter. Am anderen Ende der Stellschraube 61 ist der Anschluß 62 für die Zuführung der Druckluft zum Axiallager 6 angeordnet zwischen diesem und dem Schaftende 111 erstreckt sich der Lagerspalte 630. Auf gattungsgemäße OffenendSpinnvorrichtungen wird in bekannter Weise eine axiale Kraft aufgebracht, die sich über das freie Ende 111 des Rotorschaftes 11 abstützt. Die axiale Kraft auf den Rotorschaft wird bei der in Figur 1 gezeigten Offenend-Spinnvorrichtung durch in bekannter Weise schief gestellte Stützscheiben 4 aufgebracht. Ebenso gut ist es aber auch möglich, die axiale Kraftkompenente z.B. über einen schräg zum Rotorschaft verlaufenden Antriebsriemen oder auch eine schräg gestellte Andrück- oder Treibscheibe aufzubringen. Die Offenend-Spinnvorrichtung ist auf der Aufnahme 33, der Teil der dazugehörigen Spinnmaschine ist, befestigt.

Figur 2 zeigt eine Ausführungsform einer Stellschraube 61, die das Axiallager 6 trägt, im Schnitt. An ihrem vom Spinnrotor abgewandten Ende ist die Stellschraube mit einer mit einem Innengewinde versehenen Bohrung 611 für das Einschrauben eines Anschlusses für die Druckluftleitung versehen. Über ihre gesamte Länge hat die Stellschraube eine zentrisch angeordnete Bohrung, durch die die Luft bis zum Axiallager 6 strömt. Das Axiallager 6 besteht bei der Ausführung von Figur 2 aus der Lagerplatte, die eine zentrische Bohrung 7 besitzt. Der Durchmesser der Bohrung beträgt 0,6 mm, womit sicher gestellt wird, daß die Bohrung sich im Betrieb durch den Abrieb des Werkstoffes der Lagerplatte 63 nicht zusetzt. Die Lagerplatte selbst besteht aus elektrographitierter Kunstkohle. Die zusammen mit einem Rotorschaft aus Stahl eine reibungsarme Werkstoffpaarung bildet. Gleichzeit ist dieser Werkstoff verschleißfähig, d.h. um eine gut fluchtende Anordnung zwischen Rotorschaftende und Lagerplatte zu erhalten, kann das Lager vor der eigentlichen Inbetriebnahme einlaufen. Dies bedeuted, daß der Rotorschaft sich auf der Lagerplatte 63 einschleift, so daß die dadurch entstehenden, einander gegenüberliegenden Flächen zueinander parallel stehen. Stellschraube 61 und Lagerplatte 63 sind mittels eines Preßsitzes fest miteinander verbunden. Zur Verminderung des Luftdurchsatzes und zu einer Erhöhung der Steifigkeit des Lagers kann bei dieser Ausführung des Axiallagers die Bohrung 7 am Eintritt der Luft in Bohrung einen geringeren Durchmesser besitzten, so daß die Luft gedrosselt wird.

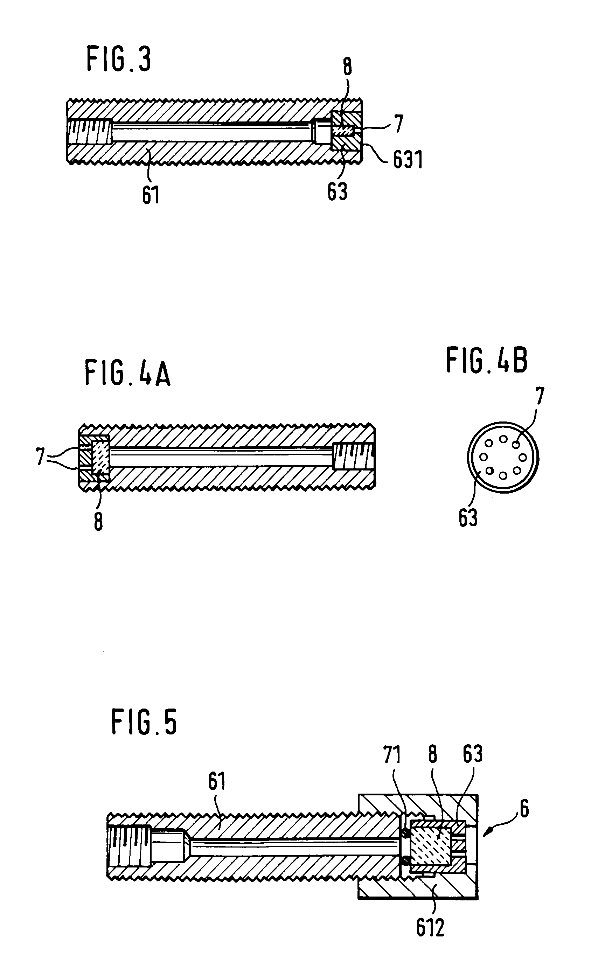

Die Stellschraube 61 von Figur 3 zeigt eine Lagerplatte 63 ähnlich Figur 1, die über einen Preßsitz in der Stellschraube 61 angeordnet ist. Die Lagerplatte 63 besitzt ebenfalls eine Bohrung 7 wie die Ausführung bei Figur 2. Diese Bohrung 7 weitet sich auf der von der Lagerfläche 631 abgewandten Seite stark auf. In dieser Aufweitung ist eine Drosselvorrichtung 8 angeordnet. Die Drosselvorrichtung besteht aus einem Sinterwerkstoff mit sehr feinen Poren. Die nach der Drosselvorrichtung 8 in der Bohrung 7 in Fließrichtung der Luft befindliche Luftsäule wird durch diese Anordnung der Drosselvorrichtung sehr kurz gehalten. Dadurch erhält das Lager eine hohe Steifigkeit.

Figur 4a zeigt eine Stellschraube 61 und eine darin angeordnete Lagerplatte 63 ähnlich Figur 3. Anders als dort stehen zum Austritt der Luft in den Lagerspalt mehrere Bohrungen 7 zur Verfügung. Ähnlich wie bei Figur 3 ist auch hier eine Drosselvorrichtung 8 in der Lagerplatte 7 angeordnet. Die besteht aus einem Sinterwerkstoff.

Figur 4b zeigt die Lagerplatte 63 in der Draufsicht. Die Bohrungen 7 sind auf einer Kreislinie mit Abstand zum Mittelpunkt gleichmäßig verteilt angeordnet.

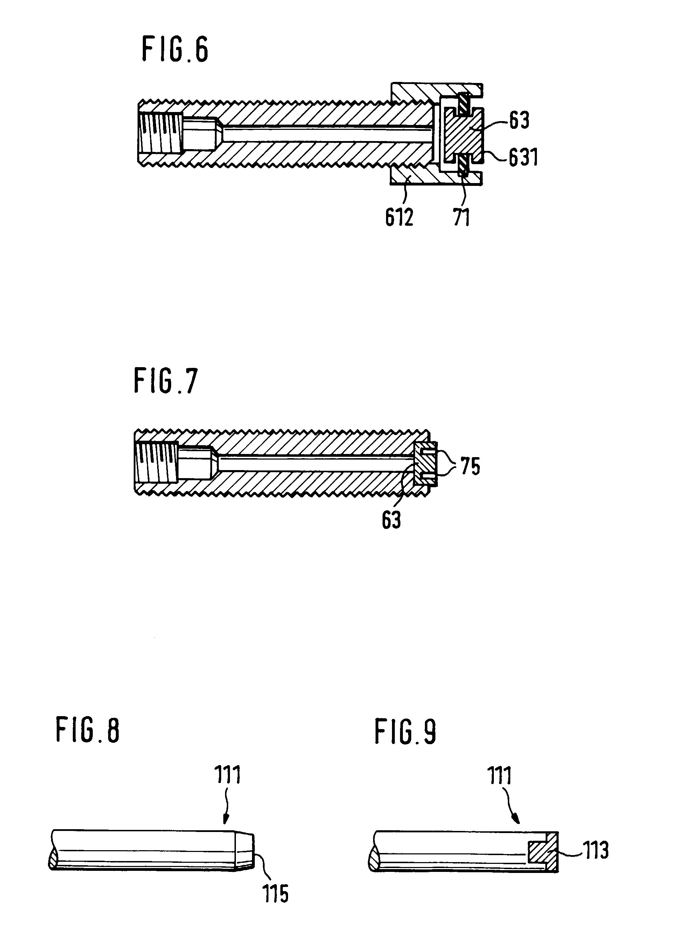

Figur 5 zeigt eine Stellschraube 61 mit einen Axiallager 6, bei dem die Lagerplatte 63 elastisch gelagert ist. Dazu wird die Lagerplatte 63 durch eine Hülse 612 an der Stellschraube 61 gehalten. Zwischen der Stellschraube 61 und der Lagerplatte 63 bzw. der in ihr integrierten Drosselvorrichtung 8, ist als elastisches Element ein O-Ring 71 angeordnet. Die Lagerplatte 63 ist dadurch in der Lage axiale Schläge des Rotorschaftes abzudämpfen. Eine ähnliche mit einer Dämpfung versehene Lagerplatte 63 ist in Figur 6 gezeigt. Das elastische Element ist hier ebenfalls ein Gummiring 71 der in einer Umfangsnut der Lagerplatte 63 angeordnet ist und an seinem Außenumfang von der Hülse 612 in axialer Richtung fixiert ist. Die Lagerplatte 63 besteht hier aus einem Reibungsarmen und gleichzeitig permeablen Werkstoff, z.B. Kunstkohle. Der Austritt der Luft erfolgt über den gesamten Querschnitt der Lagerfläche 631. Eine zusätzliche Drosselvorrichtung ist bei dieser Ausführungsform nicht erforderlich, da die Drosselwirkung durch die Poren des Werksstoffs der Lagerplatte erfolgt.

Figur 7 zeigt ein Axiallager, bei dem die Lagerplatte 63 aus einem permeablen und gleichzeitig reibungsarmen Werkstoff elektrographitierter Kunstkohle besteht. Die Lagerplatte wirkt gleichzeitig als Drosselvorrichtung. Um sicher zu verhindern, daß die Poren des permeablen Werkstoffs durch Verschleiß der bei Berührung zwischen Rotorschaft und Lagerplatte verschmiert werden, d. h. die Luftdurchlässigkeit der Lagerplatt vermindert wird, sind Sacklochbohrungen 75 in die Lagerplatte eingebracht. Der Luftaustritt in den Lagerspalt erfolgt über die Oberflächen der Sacklochbohrungen. Diese werden mittels scharfer Werkzeuge hergestellt, so daß die Oberfläche beim Bohren nicht verschmiert wird und die Poren weiterhin geöffnet bleiben. Der Durchmesser der Bohrungen ist ebenso wie bei der Lagerausführung von Figur 2 so gewählt, daß ein Zusetzen der Austrittsöffnung in den Lagerspalt verhindert wird.

Figur 8 zeigt ein vorteilhaft ausgebildetes Schaftende 111, das mit der Lagerplatte des Axiallagers zusammenarbeitet. Dazu besitzt das Schaftende 111 eine plane Fläche 115, deren Durchmesser etwas geringer als der Schaftdurchmesser ist. Der Übergang zwischen dem Schaftdurchmesser und dem Durchmesser der Fläche 115 des Endes 111 des Schaftes erfolgt wie in Figur 8 gezeigt vorteilhaft ohne sprunghaften Übergang. Bei diese Ausgestaltung des Schaftendes läßt sich der Spinnrotor sowohl leicht aus dem Lagerspalt der Stützscheibe herausziehen als auch in diesen wieder einführen.

Figur 9 zeigt ein Schaftende 111, in das ein Ansatz 113 aus einem reibungsarmen Werkstoff integriert ist. Durch einen Austausch des Spinnrotors kann gleichzeitig das Verschleißteil des Axiallaggers ausgewechselt werden. In diesem Fall arbeitet der Rotorschaft günstigerweise mit einer Lagerplatte aus einem verschleißfesten Material zusammen.

Die beschriebene Offenend-Spinnvorrichtung findet ihren Einsatz in Spinnamschinen, die mit vielen nebeneinander angeordneten gattungsmäßigen Spinnvorrichtung ausgerüstet ist. Zur Versorgung jeder einzelnen Spinnvorrichtung ist diese an eine zentrale Versorgungsleitung für Druckluft angeschlossen., über diese zentrale Leitung kann der Luftdruck im Axiallager für alle Spinnstellen gleich eingestellt werden. Dadurch ist auf einfache Weise gewährleistet daß bei allen Spinnvorrichtungen die gleichen Verhältnisse vorliegen. In einer verbesserten Ausführungsform wird der Luftdruck, der für die einzelenen Spinnstellen notwendig ist an einer mit besonderen Meßvorrichtungen versehenen Spinnstelle ermittelt und zentral für alle übrigen Spinnstellen eingestellt. Es ist auch vorteilhaft möglich mit einer Regelvorrichtung den nötigen Luftdruck z.B. über die axiale Position des Spinnrotors, für die Versorgung der Axiallager selbständig zu ermitteln und entsprechenden zu steuern.

Weiterhin ist es möglich auch einzelne Maschinenseiten oder Sektionen von Spinnmaschinen unabhänigig voneinander in der oben geschilderten Weise mit Druckluft zu versorgen.

Die Erfindung ist nicht auf die dargestellten Ausführungsformen beschränkt. Ebenso unter die Erfindung fallen Werkstoffpaarungen zwischen Schaftende und Lagerplatte, die nicht in der Beschreibung erwähnt sind. Auch ist es nicht erforderlich, daß die Flächen von Rotorschaftende und Lagerplatte ebene Flächen sind. Die Erfindung gilt genauso für z.B. gewölbte oder gestufte Flächen. Eine Kombination von Axiallagern und Stellschrauben ist für die Erfindung nicht wesentlich. Eine direkte Anordnung des Axiallagers am Lagerbock 3 fällt ebenso unter die Erfindung.

## Patentansprüche

1. Offenend-Spinnvorrichtung mit einem Spinnrotor, der über seinen Schaft durch Stützscheiben gelagert ist, auf den eine axial wirkende Kraft ausgeübt wird, die sich vom offenen Ende des Spinnrotors abgewandten Ende über den Schaft an einem Axiallager abstützt, das ein aerostatisches Lager ist, das eine mit dem Ende des Schaftes (11) zusammenarbeitende Lagerplatte (63) mit einer Lagerfläche (631) besitzt, durch die der Luftaustritt in den Lagerspalt (630) des Axiallagers (6) erfolgt, dadurch gekennzeichnt, daß die Werkstoffe von Lagerplatte (63) und Ende des Schaftes (111) eine reibungsarme Werkstoffpaarung ergeben und die Luft vor dem Austritt in den Lagerspalt (630) eine Drosselvorrichtung (8) passiert.

2. Offenend-Spinnvorrichtung nach Anspruch 1, dadurch gekennzeichnet, daß wenigstens einer der Werkstoffe der Werkstoffpaarung verschleißfähig ist.

3. Offenend-Spinnvorrichtung nach Anspruch 1 oder 2, dadurch gekennzeichnet, daß das Ende des Schaftes (111) mit einem Ansatz (113) aus einem reibungsarmen Werkstoff versehen ist.

4. Offenend-Spinnvorrichtung nach einem oder mehreren der Ansprüche 1 bis 3, dadurch gekennzeichnet, daß wenigstens der eine Werkstoff ein Kohlewerkstoff ist.

5. Offenend-Spinnvorrichtung nach einem oder mehreren der Ansprüche 1 bis 4, dadurch gekennzeichnet, daß die Lagerplatte (63) aus einem permeablen Werkstoff besteht.

6. Offenend-Spinnvorrichtung nach einem oder mehreren der Ansprüche 1 bis 5, dadurch gekennzeichnet, daß die Lagerplatte (63) elastisch gelagert ist.

7. Offenend-Spinnvorrichtung nach einem oder mehreren der Ansprüche 1 bis 6, dadurch gekennzeichnet, daß die Lagerplatte (63) eine oder mehrere Bohrungen (7) für den Austritt der Luft besitzt.

8. Offenend-Spinnvorrichtung nach Anspruch 5, dadurch gekennzeichnet, daß die Lagerplatte (63) eine oder mehrere sacklochförmige Bohrungen (75) für den Austritt der Luft in den Lagerspalt besitzt.

9. Offenend-Spinnvorrichtung nach Anspruch 7 oder 8, dadurch gekennzeichnet, daß eine Bohrung (7,75) zentrisch angeordnet ist.

10. Offenend-Spinnvorrichtung nach Anspruch 7 oder 8, dadurch gekennzeichnet, daß die Bohrungen (7,75) auf einer Kreislinie angeordnet sind.

11. Offenend-Spinnvorrichtung nach einem oder mehreren der Ansprüche 7 bis 10, dadurch gekennzeichnet, daß die Bohrungen (7,75) eine Länge von weniger als 7 mm haben.

12. Offenend-Spinnvorrichtung nach einem oder mehreren der Ansprüche 7 bis 11, dadurch gekennzeichnet, daß die Bohrungen (7,75) einen Durchmesser von mehr als 0,5 mm besitzen.

13. Offenend-Spinnvorrichtung nach Anspruch 12, dadurch gekennzeichnet, daß die Drosselvorrichtung (8) aus wenigstens einer dünnen, die Luft führenden Bohrung besteht.

14. Offenend-Spinnvorrichtung nach Anspruch 12 oder 13, dadurch gekennzeichnet, daß die Drosselvorrichtung (8) unmittelbar vor dem Eintritt der Luft in die Lagerplatte (63) angeordnet ist.

15. Offenend-Spinnvorrichtung nach einen oder mehreren der Ansprüche 12 bis 14, dadurch gekennzeichnet, daß die Drosselvorrichtung (8) aus dem gleichen Werkstoff besteht wie die Lagerplatte (63)

16. Offenend-Spinnvorrichtung nach einen oder mehreren der Ansprüche 12 bis 15, dadurch gekennzeichnet, daß die Drosselvorrichtung (8) aus einem permeablen Werkstoff besteht.

17. Offenend-Spinnvorrichtung nach einem oder mehreren der Ansprüche 12 bis 16, dadurch gekennzeichnet, daß die Drosselvorrichtung (8) aus einem Sinterwerkstoff besteht.

18. Offenend-Spinnvorrichtung nach einem oder mehreren der Ansprüche 1 bis 17, dadurch gekennzeichnet, daß das Axiallager (6) in axialer Richtung verstellbar angeordnet ist.

19. Offenend-Spinnvorrichtung nach einem oder mehreren der Ansprüche 1 bis 18, dadurch gekennzeichnet, daß das Axiallager über eine Versorgungsleitung an eine die Offenend-Spinnvorrichtung mit Druckluft versorgende Luftquelle angeschlossen ist.

20. Offenend-Spinnvorrichtung nach Anspruch 19, dadurch gekennzeichnet, daß die das Axiallager versorgende Zuluftleitung Anschlüsse für weitere Offenend-Spinnvorrichtungen besitzt.

21. Offenend-Spinnvorrichtung nach Anspruch 19 oder 20, dadurch gekennzeichnet, daß der Druck der das Axiallager versorgenden Luft einstellbar ist.

22. Offenend-Spinnvorrichtung nach einen oder mehreren der Ansprüche 19 bis 21, dadurch gekennzeichnet, daß der Druck der eine Offenend-Spinnvorrichtung versorgenden Luft unabhängig für jede Offenend-Spinnvorrichtung einstellbar ist.

23. Offenend-Spinnvorrichtung nach einem oder mehreren der Ansprüche 19 bis 22, dadurch gekennzeichnet, daß der Druck der das Axiallager versorgenden Luft in Abhängigkeit von der Belastung des Axiallagers (6) regelbar ist.

24. Offenend-Spinnvorrichtung nach einen oder mehreren der Ansprüche 1 bis 23, dadurch gekennzeichnet, daß das die schaftseitige Lagerfläche (115) bildende Ende des Schaftes (11) einen Durchmesser aufweist, der im wesentlichen dem übrigen Durchmesser des Schaftes (11) entspricht.

25. Offenend-Spinnvorrichtung nach einen oder mehreren der Ansprüche 1 bis 24, dadurch gekennzeichnet, daß das die schaftseitige Lagerfläche (115) bildende Ende des Schaftes (11) einen kleineren Durchmesser als der übrige Schaft (11) aufweist und der Durchmesserübergang ohne Durchmessersprung erfolgt.

26. Lagerplatte in einem aerostatischen Axiallager einer Offenend-Spinnvorrichtung nach einem oder mehreren der Ansprüche 1 bis 25, dadurch gekennzeichnet, daß die Lagerplatte (63) aus einem Kohlewerkstoff, beispielsweise elektrographitierter Kunstkohle, besteht, und die Lagerplatte (63) und die Drosselvorrichtung (8) einteilig hergestellt sind.

27. Lagerplatte nach Anspruch 26, dadurch gekennzeichnet, daß die Lagerplatte (63) mittels eines Preßsitzes an eine Stellschraube (61) angeordnet ist.

## Claims

1. Open-end spinning device, with a spinning rotor, which is bearingly supported via its shaft by supporting disks, on which an axially acting force is exerted which bears from the end away from the spinning rotor via the shaft against a thrust bearing, computing the thrust bearing is an aerostatic bearing which is provided with a bearing plate (63) with a supporting surface (631) interacting with the end of the shaft (11), through which air escapes into the bearing gap (630) of the thrust bearing (6), **characterised in that** the materials of which the bearing plate (63) and the shaft end (111) are made constitute a low-friction pairing of material and the air before its escape into the bearing gap (630) passes a choke (8).

2. Open-end spinning device according to claim 1, **characterised in that** at least one of the materials in the pairing of materials is abradable .

3. Open-end spinning device according to claim 1 or 2, **characterised in that** the shaft end (111) is provided with a projection (113) made of a low-friction material.

4. An open-end spinning device according to one or several of the claims 1 to 3, **characterised in that** at least one of the materials is a carbon material.

5. Open-end spinning device according to one or several of the claims 1 to 4, **characterised in that** the bearing plate (63) is made of a permeable material.

6. Open-end spinning device according to one or several of the claims 1 to 5, **characterised in that** the bearing plate (63) is supported elastically.

7. Open-end spinning device according to one or several of the claims 1 to 6, **characterised in that** the bearing plate (63) has one or several bores (7) to let the air escape.

8. Open-end spinning device according to claim 5, **characterised in that** the bearing plate (63) has one or several closed-end bores (75) for the air to escape into the bearing gap.

9. Open-end spinning device according to claims 7 or 8, **characterised in that** one bore (7, 75) is located in the centre.

10. Open-end spinning device according to claims 7 or 8, **characterised in that** the bores (7, 75) are arranged on a circular line.

11. Open-end spinning device according to one or several of claims 7 to 10, **characterised in that** the bores (7, 75) are less than 7 mm long.

12. Open-end spinning device according to one or several of claims 7 to 11, **characterised in that** the bores (7, 75) have a diameter of more than 0,5 mm.

13. Open-end spinning device according to claim 12, **characterised in that** the choke (8) has at least one thin bore carrying the air.

14. Open-end spinning device according to claim 12 or 13, **characterised in that** the choke (8) is located immediately before the air inlet into the bearing plate (63).

15. Open-end spinning device according to one or several of the claims 12 to 14, **characterised in that** the choke (8) is made of the same material as the bearing plate (63).

16. Open-end spinning device according to one or several of the claims 12 to 15, **characterised in that** the choke (8) is made of a permeable material.

17. Open-end spinning device according to one or several of the claims 1 to 17, **characterised in that** the choke (8) is made of a tufaceous material.

18. Open-end spinning device according to one or several of the claims 1 to 17, **characterised in that** the thrust bearing (6) is designed so that it can be shifted in axial direction.

19. Open-end spinning device according to one or several of the claims 1 to 18, **characterised in that** the thrust bearing is connected via a supply circuit to a source of air which supplies the open-end spinning device with compressed air.

20. Open-end spinning device according to claim 19, **characterised in that** the air-inlet supply line supplying the thrust bearing is equipped with connections for additional open-end spinning devices.

21. Open-end spinning device according to claim 19 or 20, **characterised in that** the pressure of the air supplied to the thrust bearing can be adjusted.

22. An open-end spinning device according to one or several of claims 19 to 21, **characterised in that** the pressure supplying an open-end spinning device can be adjusted separately for each open-end spinning device.

23. Open-end spinning device according to one or several of the claims 19 to 22, **characterised in that** the pressure of the air supplying the thrust bearing can be adjusted in function of the load on the thrust bearing (6) .

24. Open-end spinning device according to one or several of the claims 1 to 23, **characterised in that** the end of shaft (11) constituting the bearing surface (115) has a diameter which is essentially the same as the diameter of the shaft throughout.

25. Open-end spinning device according to one or several of the claims 1 to 24, **characterised in that** the end of shaft (11) constituting the bearing surface (115) on the side of the shaft has a smaller diameter than the remainder of the shaft (11) and in that the diameter transmission is without jumps in diameter.

26. Bearing plate in an aerostatic thrust bearing of an open-end spinning device according to one or several of the claims 1 to 25, **characterised in that** the bearing plate (63) is made of a carbon material, for example electrographited artificial coal, and that the bearing plate (63) and the choke (8) are made constitute one-piece .

27. Bearing plate according to claim 26, **characterised in that** the bearing plate (63) is arranged to a set screw by a press fit.

## Revendications

1. Dispositif à filer à bout libre comprenant un rotor à filer qui est logé par l'intermédiaire de sa queue sur des disques d'appui et sur lequel une force agissant de façon axiale est exercée qui, depuis le bout opposé au bout ouvert du rotor à filer prend appui, par l'intermédiaire de la queue, sur un palier axial qui est un palier aérostatique comportant une plaque d'appui (63) avec une surface (631) d'appui qui coopère avec l'extrémité de la queue (11) et par laquelle la sortie de l'air dans la fente (630) de palier du palier axial (6) peut s'effectuer, caractérisé en ce que les matériaux de la plaque d'appui (63) et de l'extrémité (111) de la queue donne un appariement der matériaux à faible friction et en ce que l'air passe un dispositif (8) d'étranglement avant de sortir dans la fente (630) de palier.

2. Dispositif à filer à bout libre selon la revendication 1, caractérisé en ce qu'au moins un des matériaux de l'appariement der matériaux est susceptible de résister à l'usure.

3. Dispositif à filer à bout libre selon la revendication 1 ou 2, caractérisé en ce que l'extrémité (111) de la queue est pourvue d'une embase (113) en un matériau à faible friction.

4. Dispositif à filer à bout libre selon l'une ou plusieurs des revendications 1 à 3, caractérisé en ce qu'au moins l'un des matériaux est un matériau de carbone.

5. Dispositif à filer à bout libre selon l'une ou plusieurs des revendications 1 à 4, caractérisé en ce que la plaque d'appui (63) consiste en un matériau perméable.

6. Dispositif à filer à bout libre selon l'une ou plusieurs des revendications 1 à 5, caractérisé en ce que la plaque d'appui (63) est logée de façon élastique.

7. Dispositif à filer à bout libre selon l'une ou plusieurs des revendications 1 à 6, caractérisé en ce que la plaque d'appui (63) comporte un ou plusieurs alésages (7) pour la sortie de l'air.

8. Dispositif à filer à bout libre selon la revendication 5, caractérisé en ce que la plaque d'appui (63) comporte un ou plusieurs alésages (75) en forme de trous borgnes pour la sortie de l'air dans la fente du palier.

9. Dispositif à filer à bout libre selon la revendication 7 ou 8, caractérisé en ce qu'un alésage est disposé de façon centrée.

10. Dispositif à filer à bout libre selon la revendication 7 ou 8, caractérisé en ce que les alésages (7, 75) sont disposés sur un cercle.

11. Dispositif à filer à bout libre selon l'une ou plusieurs des revendications 7 à 10, caractérisé en ce que les alésages (7, 75) présente une longueur inférieure à 7 mm.

12. Dispositif à filer à bout libre selon l'une ou plusieurs des revendications 7 à 11, caractérisé en ce que les alésages (7, 75) présente un diamètre supérieur à 0,5 mm.

13. Dispositif à filer à bout libre selon la revendication 12, caractérisé en ce que le dispositif d'étranglement (8) consiste en au moins un alésage étroit guidant l'air.

14. Dispositif à filer à bout libre selon la revendication 12 ou 13, caractérisé en ce que le dispositif d'étranglement (8) est disposé immédiatement avant l'entrée de l'air dans la plaque d'appui (63).

15. Dispositif à filer à bout libre selon la revendication 12 à 14, caractérisé en ce que le dispositif d'étranglement (8) consiste en le même matériau que la plaque d'appui (63).

16. Dispositif à filer à bout libre selon la revendication 12 à 15, caractérisé en ce que le dispositif d'étranglement (8) consiste en un matériau perméable.

17. Dispositif à filer à bout libre selon l'une ou plusieurs des revendications 12 à 16, caractérisé en ce que le dispositif d'étranglement (8) consiste en un matériau fritté.

18. Dispositif à filer à bout libre selon l'une ou plusieurs des revendications 1 à 17, caractérisé en ce que le palier axial (6) est disposé de façon à pouvoir être réglé en sens axial.

19. Dispositif à filer à bout libre selon l'une ou plusieurs des revendications 1 à 18, caractérisé en ce que le palier axial est raccordé, par l'intermédiaire d'un conduit d'alimentation, à une source d'air comprimé alimentant le dispositif à filer à bout libre en air comprimé.

20. Dispositif à filer à bout libre selon la revendication 19, caractérisé en ce que le conduit d'air amené alimentant le palier axial comporte des raccords pour d'autres dispositifs à filer à bout libre.

21. Dispositif à filer à bout libre selon la revendication 19 ou 20, caractérisé en ce que la pression de l'air alimentant le palier axial est réglable.

22. Dispositif à filer à bout libre selon l'une ou plusieurs des revendications 19 à 21, caractérisé en ce que la pression de l'air alimentant un dispositif à filer à bout libre peut être réglée individuellement pour chaque dispositif à filer à bout libre.

23. Dispositif à filer à bout libre selon l'une ou plusieurs des revendications 19 à 22, caractérisé en ce que la pression de l'air alimentant le palier axial peut être réglée en fonction de la sollicitation du palier axial (6).

24. Dispositif à filer à bout libre selon l'une ou plusieurs des revendications 1 à 23, caractérisé en ce que l'extrémité de la queue (11) constituant la surface d'appui (115) du côté de la queue présente un diamètre qui correspond essentiellement au diamètre du reste de la queue (11).

25. Dispositif à filer à bout libre selon l'une ou plusieurs des revendications 1 à 24, caractérisé en ce que l'extrémité de la queue (11) constituant la surface d'appui (115) du côté de la queue présente un diamètre plus petit que le reste de la queue (11) et que l'augmentation du diamètre ne se fait pas brusquement.

26. Plaque d'appui dans un palier axial aérostatique d'un dispositif à filer à bout libre selon l'une ou plusieurs des revendications 1 à 25, caractérisée en ce que la plaque d'appui (63) consiste en un matériau de carbone par ex. en charbon artificiel électrographité et que la plaque d'appui (63) et le dispositif d'étranglement (8) sont conçus en une seule pièce.

27. Plaque d'appui selon la revendication 26, caractérisée en ce que la plaque d'appui (63) est disposée à une vis de réglage (61) moyennant un ajustage serré.
